# FASCICULE DE BREVET EUROPEEN

(11) **EP 0 553 019 B1**
(45) Date de publication et mention de la délivrance du brevet: **28.08.1996**
(21) Numéro de dépôt: 93400114.0
(22) Date de dépôt: 19.01.1993
(51) Int. Cl.: F23G 5/32, F23J 1/08, C04B 18/10

(54) **Procédé destiné à brûler des combustibles solides à forte teneur en cendres fusibles et métaux lourds**
Verfahren zur Verbrennung von festen Brennstoffen mit einem hohen Gehalt an schmelzbaren Aschen und Schwermetallen
Method for burning solid fuels with a high content of fusible ashes and heavy metals

(30) Priorité: 24.01.1992 FR 9100766
(43) Date de publication de la demande: 28.07.1993
(73) Titulaire: INSTITUT FRANCAIS DU PETROLE, F-92502 Rueil-Malmaison (FR)
(72) Inventeur: Martin, Gérard, F-92500 Rueil Malmaison (FR)

(56) Documents cités:
- EP-A- 0 451 006
- EP-A- 0 455 624
- BE-A- 536 697
- DE-A- 3 506 102
- US-A- 3 039 406
- US-A- 4 765 258
- DATABASE WPIL Section Ch, Week 8240, Derwent Publications Ltd., London, GB; Class L02, AN 82-84851 & JP-A-57 140 366 (NGK)

## Description

La présente invention concerne le domaine de la génération de chaleur obtenue par combustion de combustibles solides à forte teneur en cendres fusibles et en métaux lourds.

Plus spécifiquement, le procédé objet de l'invention permet de brûler des combustibles obtenus à partir de déchets industriels et/ou ménagers hétérogènes.

L'invention est donc plus particulièrement destinée à brûler des combustibles présentant des caractéristiques particulières qui de ce fait ne peuvent être utilisés dans tous les types de générateurs thermiques.

Le problème à l'origine de la présente invention concerne le traitement des déchets produits par les ménages et les industries. Ces déchets peuvent être très hétérogènes et ne peuvent pas toujours faire l'objet d'un tri et d'un recyclage des fractions obtenues, à la fois pour des raisons techniques et pour des raisons économiques. Ces déchets hétérogènes sont souvent caractérisés par la présence de quantités significatives de matières minérales.

Parmi ces matières, on trouve des composés calciques (calcaires par exemple) et des verres. En combinaison, de telles matières minérales présentent des points de fusion relativement bas, ce qui pose souvent des problèmes lorsqu'on souhaite incinérer ces déchets dans des foyers qui opèrent normalement en cendres sèches.

Ces déchets particuliers peuvent être brûlés directement ou faire l'objet d'un traitement préalable, afin d'améliorer leur comportement au stockage ou en combustion. C'est par exemple le cas lorsqu'on procède à un traitement à la vapeur des ordures ménagères, suivi d'une granulation. Cette approche permet d'obtenir un déchet stabilisé, stockable pendant plusieurs mois et facilement manipulable. La thermolyse des déchets décrite dans les demandes de brevets EP-A-0 485 255 et EP-A-0 524 847 constitue aussi un prétraitement des déchets avant combustion. Elle transforme le déchet en un combustible stabilisé et d'une granulométrie relativement homogène, compatible avec les moyens classiques de manutention pneumatique, et elle assure en plus l'élimination de certains composés nocifs comme le chlore, le soufre, le fluor, le mercure, etc...

Afin de pouvoir brûler les combustibles spécifiques décrits ci-dessus, la présente invention propose d'utiliser un générateur thermique de type "foyer cyclone à cendres fondues".

La technique du foyer cyclone à cendres fondues est connue depuis relativement longtemps et est employée jusqu'à présent pour brûler les charbons.

Les brevets US 4624191 et US 4765258 illustrent respectivement un foyer cyclone et un procédé de fonctionnement d'un foyer cyclone classique. Un autre cyclone pour la combustion de gaz est montré dans le document EP-A-0 455 624.

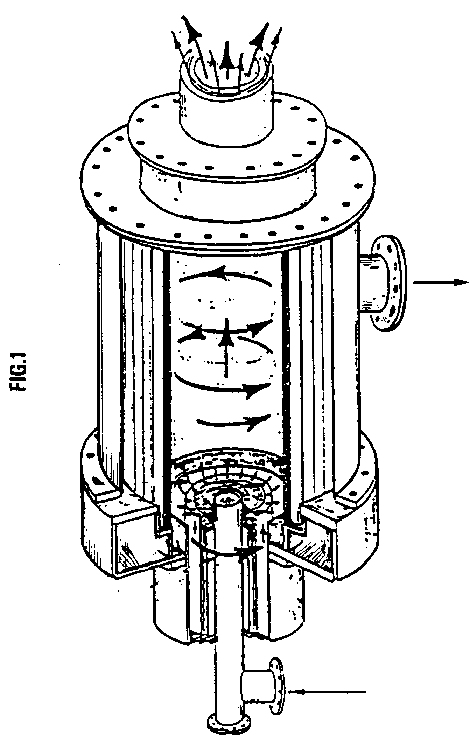

De plus, la figure 1 représente par une vue en perspective éclatée un tel foyer cyclone dans lequel l'air de combustion est introduit tangentiellement de façon à entraîner les particules de charbon vers la paroi par effet centrifuge. Ce type de foyer assure un échange très intense entre l'air et le combustible, ce qui permet d'avoir des densités de feu importante (plusieurs MW/m3) et donne ainsi de la compacité au système. Par ailleurs, le temps de séjour des particules étant beaucoup plus important que celui des gaz, le foyer admet des combustibles de granulométries beaucoup plus grossières que les brûleurs à charbon pulvérisé. Enfin, les foyers cyclone travaillent avec des excès d'air faibles, ce qui conduit à de bons rendements globaux.

Le fait de traiter les combustibles spécifiques énoncés ci-dessus grâce à un générateur thermique de type foyer cyclone présente notamment les avantages suivants :
- Les rendements de combustion sont plus élevés que dans les systèmes d'incinération utilisant un four tournant ou à grille par exemple. Les rendements sont supérieurs à 95 %, voire à 98 %, tandis que selon l'art antérieur, ils sont de l'ordre de 80 à 90 % ;
- Le fonctionnement en sous stoechiométrie tel qu'il sera expliqué ci-dessous empêche la formation de NO et de N2O à partir de l'azote contenu dans le combustible ;
- L'essentiel des cendres produites par ce type de combustion se présentent sous forme fondue, où l'on retrouve la majorité des contaminants métalliques. Ces cendres fondues sont considérées comme inertes vis-à-vis de l'environnement et peuvent être mises en décharge ou utilisées dans les travaux publics par exemple, sans précaution particulière ;
- Le foyer cylindrique possède une certaine inertie qui absorbe facilement les variations de composition, donc de pouvoir calorifique inférieur du combustible ;
- Le choix d'un foyer à axe vertical permet d'insérer plus facilement le générateur selon l'invention dans de petites unités de traitement et/ou de combustion des déchets.

Les avantages énoncés ci-dessus peuvent être simultanément réalisés grâce à l'invention qui vise un procédé de combustion du type mentionné en tête de la description.

Plus précisément, le procédé consiste à réaliser une combustion sensiblement adiabatique dans une chambre (ou foyer cyclone) munie d'au moins une première entrée tangentielle destinée à l'injection d'un mélange d'air et de combustible et qui est animé d'un mouvement hélicoïdal dans ladite chambre, à réaliser une injection complémentaire dans ladite chambre, à faire évacuer et à refroidir les cendres fondues générées par la combustion et à réaliser une évacuation séparée des effluents de combustion.

Selon l'invention, le mouvement général de l'écoulement dans ladite chambre est d'abord hélicoïdal descendant autour d'un axe vertical puis ascendant ; le combustible utilisé est un déchet ou un combustible dérivé d'un déchet à forte teneur en cendres fusibles ; le combustible présentant un rapport CaO/SiO2 compris entre 0,2 et 1,2.

Avantageusement, la combustion est réalisée en sous-stoechiométrie dans ladite chambre puis la combustion est achevée extérieurement à la chambre.

De façon caractéristique, le temps de séjour moyen des gaz dans la chambre de combustion est compris entre 0,2 et 1 s., de préférence entre 0,3 et 0,6 s.

En outre, un refroidissement des cendres peut être prévu. Le refroidissement peut être réalisé par trempe des cendres dans un liquide à froid. Sans sortir du cadre de l'invention, le refroidissement peut être réalisé à sec par aération des cendres par exemple.

De façon appropriée, une extraction des particules contenues dans les effluents de combustion peut être effectuée par un moyen destiné à cet effet et placé à proximité de la sortie des effluents.

Spécifiquement un échange de chaleur peut avoir lieu, par exemple grâce à l'implantation dans le liquide de trempe des cendres, d'un dispositif approprié.

Additionnellement, un mélange d'air et de combustible liquide ou gazeux supplémentaire peut alimenter la chambre de combustion, la masse dudit combustible pouvant être comprise entre 5 et 50 % de la masse du combustible solide.

Le procédé, selon l'invention, sera mieux compris à la lecture de la description qui va suivre, en référence aux dessins annexés selon lesquels :
- la figure 2 est une vue en coupe longitudinale d'une installation comportant un générateur de chaleur ;
- la figure 3 est une vue en coupe longitudinale d'un génerateur de chaleur permettant de réaliser l'invention
- la figure 4 est une coupe longitudinale d'un autre generateur de chaleur ;
- la figure 5 est une coupe longitudinale d'un generateur additionnel ;
- la figure 6 est une coupe longitudinale partielle d'un mode de réalisation possible du generateur.

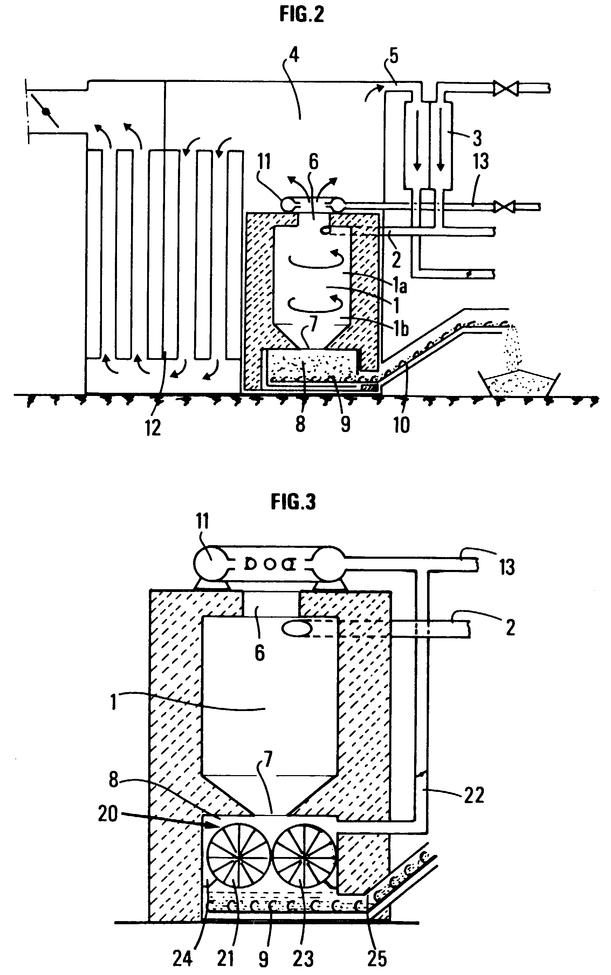

La figure 2 est, une représentation simplifiée du générateur thermique permettant de réaliser l'invention. Celui-ci comprend un foyer cyclone vertical 1, qui se décompose en une partie cylindrique supérieure 1-a et une partie conique inférieure 1-b. Le cyclone est équipé d'une ligne 2 assurant une introduction tangentielle de l'air primaire et du combustible. Les débits d'air primaire et de combustible sont ajustés de façon à être en sous-stoechiométrie dans le cyclone 1.

L'air primaire est préchauffé à une température comprise entre 100 et 500°C, dans un échangeur de chaleur 3. Cet échangeur fonctionne par exemple avec des fumées chaudes prélevées dans une chambre de combustion 4 par la ligne 5. La chambre de combustion 4 est constituée du volume situé en aval dudit foyer 1, côté effluents. Après introduction dans le foyer cyclone 1, l'écoulement gaz-particules progresse vers le bas en suivant un mouvement hélicoïdal qui se renverse dans la partie conique et remonte ensuite verticalement dans la partie centrale pour sortir par au moins un orifice axial supérieur 6. Au cours de ce parcours, les particules s'échauffent, s'enflamment et se concentrent au niveau de la paroi du cyclone 1. Dans la partie basse du cyclone, l'élévation de température est telle que les cendres fondent et s'écoulent vers au moins un orifice de sortie 7. Ensuite, les cendres tombent dans une cavité remplie d'eau 8 où elles sont trempées et refroidies.

Ces cendres qui se présentent sous forme de petites granules vitrifiées, sont évacuées vers l'extérieur du générateur par un évacuateur mécanique 9 (racleur par exemple), monté par exemple sur un sabot d'extraction 10. L'eau contenue dans la cavité 8 assure aussi l'isolation pneumatique du système par rapport à l'extérieur. L'orifice 6 du foyer cyclone 1 est préférentiellement équipé d'un dispositif 11 qui permet l'introduction de l'air secondaire destiné à achever la combustion. Une ligne spécifique 13 est prévue afin d'acheminer l'air secondaire vers le dispositif 11. Au niveau du dispositif 11, il se développe une seconde flamme. Les produits de combustion sont ensuite envoyés dans une zone d'échange par convection 12, pour être ramenés à une température comprise entre 150 et 400°C, puis évacués vers un dispositif de filtration non représenté sur la figure 2.

Bien entendu, des vannes, clapets et autres moyens de régulation de débit (non repérés) peuvent être disposés sur les différentes lignes 2,5, 13 ... de l'installation.

Avec ce premier generateur, il peut se créer au niveau du contact entre les cendres fondues et l'eau de la cavité 8 une vaporisation excessive de l'eau de trempe et/ou la formation d'un brouillard dû à des phénomènes de caléfaction.

Afin de pallier cet éventuel problème, un autre mode de réalisation de l'invention est proposé, tel qu'illustré schématiquement par la figure 3.

Ce generateur ne diffère du generateur décrit ci-avant que par l'adjonction d'un dispositif 20 placé dans la cavité 8 et destiné à refroidir à sec les cendres. Pour ce faire, un ou plusieurs cylindres 21 métalliques rotatifs à axe horizontaux sont refroidis intérieurement par de l'air secondaire issu d'une tubulure spécifique 22 dérivée de la tubulure principale 13 et qui débouche dans la cavité 8. Des ailettes 23 internes aux cylindres 21 peuvent être présentes afin d'améliorer l'échange thermique avec l'air de combustion. Ainsi, les cendres fondues tombent sur deux ou plusieurs des cylindres 21. Des racleurs 24, fixés par exemple sur les parois de la cavité 8, sont en contact avec chaque cylindre 21, afin de faciliter le décrochage des cendres accrochées aux cylindres 21. Un siphon 25 rempli d'eau est avantageusement prévu au niveau de la sortie des cendres refroidies, afin d'assurer l'isolation pneumatique vis-à-vis de l'extérieur. Comme dans le mode de réalisation décrit en relation avec la figure 2, les cendres tombées dans la cavité 8 sont évacuées par des moyens mécaniques 9.

Une autre particularité liée au mode de réalisation de la figure 3 réside dans le contrôle de l'évacuation des cendres. Afin de maintenir une température des cendres suffisante pour les maintenir à l'état fondu au niveau de l'orifice de passage, celui-ci est calibré pour qu'une partie des produits de combustion s'échappe par cet orifice (au lieu d'être entraînés dans l'écoulement ascendant). Ainsi, les produits de combustion sont partiellement refroidis au contact des cylindres 21 puis de l'eau présente dans le fond de la cavité 8. Ces produits quittent préférentiellement la cavité 8 par la tubulure 22 dans laquelle ils sont mélangés à l'air secondaire provenant de la ligne principale 13.

Après avoir transité dans la tubulure 22, ces produits de combustion sont recyclés par l'intermédiaire du dispositif 11. Un dispositif de régulation de débit (non référencé) peut bien entendu être placé dans la tubulure 22.

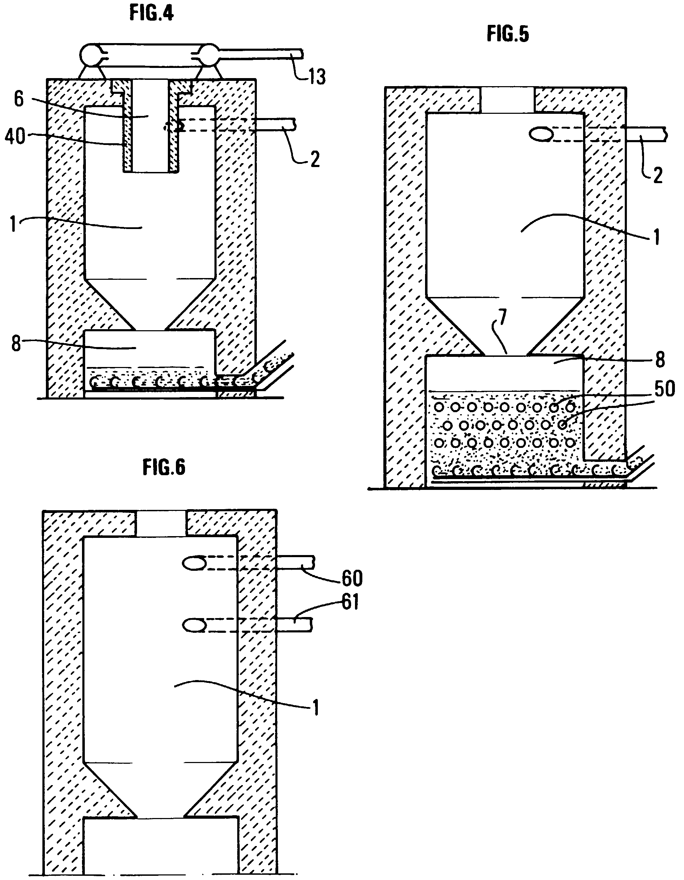

Un autre aménagement possible permettant de réaliser l'invention est montré sur la figure 4 et concerne la mise en place d'une cheminée 40, suspendue à la sortie 6 du foyer cyclone. Le dispositif 40 permet de réduire la quantité de particules entraînées hors du foyer cyclone et augmente aussi le rendement en cendres fondues. La cheminée a une forme sensiblement cylindrique, mais des variantes légèrement coniques peuvent aussi être utilisées.

Un autre mode permettant de réalisation de l'invention est illustré à la figure 5. Il consiste à implanter un faisceau d'échange 50 dans le liquide de trempe des cendres, afin de maintenir sa température dans une plage donnée par exemple entre 60 et 95°C. Le faisceau d'échange 50 peut être un économiseur qui chauffe l'eau à son arrivée ou à son retour dans la chaudière. Le dispositif 50 permet de récupérer une bonne partie de la chaleur de fusion et de la chaleur latente des cendres. Le dispositif 50 améliore donc le rendement énergétique global du générateur. Il évite aussi une vaporisation trop intense du liquide de trempe et réduit les quantités de vapeur entraînées vers le foyer cyclone. L'écartement entre les tubes du faisceau d'échange 50 est au minimum de deux fois le diamètre extérieur des tubes, afin de laisser un libre passage aux particules de cendres solidifiées.

Dans le cas de combustibles à très forte teneur en cendres, plus de 60 %, ou à cendres posant des problèmes de fusion, le foyer cyclone fonctionnera d'une manière plus avantageuse avec l'adjonction d'un combustible de soutien. La figure 6 est un exemple qui illustre cette possibilité. Le foyer cyclone 1 comporte une première ligne 60 d'introduction tangentielle du combustible de soutien qui peut être un combustible liquide ou gazeux mélangé à de l'air de combustion. Le rapport air de combustion/combustible est tel que l'on est proche de la stoechiométrie. Il se forme ainsi une première flamme très chaude dans la partie supérieure du foyer cyclone. Le combustible solide est introduit par la ligne 61 qui débouche elle aussi tangentiellement dans le foyer 1. Le débit d'air qui accompagne le combustible est tel que la stoechiométrie globale dans le foyer cyclone se situe dans la gamme préalablement définie. Le débit de combustible auxiliaire peut représenter en masse, 5 à 50 % du débit de combustible solide.

Dans tous les modes de réalisation envisagés ci-dessus, l'air secondaire est introduit par le dispositif au niveau de la sortie supérieure 6 du foyer cyclone 1.

Les effluents provenant du foyer cyclone étant animés d'un mouvement de rotation intense, il y a généralement un mélange très rapide des deux courants gazeux. Ce mélange très rapide peut conduire à des températures locales élevées, propices à la formation de NO d'origine thermique. Pour éviter cette formation de NO, l'introduction de l'air secondaire peut être éloignée de la sortie 6 du foyer cyclone, afin de retarder le mélange des deux courants gazeux. Une autre possibilité consiste à équiper la sortie du foyer cyclone d'un dispositif qui réduit ou supprime la mise en rotation des effluents issus dudit foyer cyclone. Ce dispositif peut être une grille, un monolithe à grosses mailles, une sortie en forme de croix ou d'étoile, ou tout autre dispositif connu de l'homme de l'art. Il peut être monté sur la sortie 6 du foyer cyclone, ou faire partie intégrante de la cheminée 40, lorsque celle-ci existe.

Bien entendu, les éléments particuliers révélés dans chacun de modes permettant de réalisation décrits ci-avant peuvent être présents isolément ou tous ensemble. L'homme de métier choisira en fonction des conditions de fonctionnement particulières auxquelles le générateur thermique doit répondre d'équiper ce générateur d'un ou plusieurs de ces éléments particuliers.

L'invention concerne le procédé de fonctionnement du générateur décrit ci-dessus. Les principales étapes du procédé ayant été décrites en tête de la description. Les compléments suivants seront apportés maintenant :
- le ou les combustibles utilisés ont une granulométrie comprise entre 1 et 10 000 microns ;
- la température de fonctionnement du foyer cyclone 1 se situe entre 1000°C et 1800°C, de préférence entre 1200 et 1500°C ;
- les cendres fusibles représentent 20 à 90 % en masse, présentent une forte teneur en azote (0,5 à 5 % en masse) et une forte teneur en métaux lourds (0,1 à 5 % en masse).

Contrairement au foyer cyclone 1, la zone 4 dans laquelle est achevée la combustion n'est pas nécessairement constituée de matériaux réfractaires puisque l'adiabaticité n'est plus recherchée dans cette seconde étape de la combustion.

## Revendications

1. Procédé destiné à brûler des combustibles solides, consistant à réaliser une combustion sensiblement adiabatique dans un foyer cyclone (1) muni d'au moins une entrée tangentielle pour un mélange d'air et de combustible primaire qui est ainsi animé d'un mouvement hélicoïdal autour d'un axe vertical dans ledit foyer (1) et une évacuation séparée des cendres et des effluents de combustion, selon lequel ladite combustion est réalisée en sous stoechiométrie dans ledit foyer (1) et est achevée à l'extérieur dudit foyer, et selon lequel le combustible solide est un déchet ou un combustible dérivé d'un déchet avec une forte teneur en cendres fusibles, ledit combustible solide présentant un rapport CaO/SiO2 compris entre 0,2 et 1,2, et une forte teneur en azote et en métaux lourds, de sorte que ledit procédé permet de réduire les émissions de NO_{X} et de restituer des cendres fondues inertes vis-à-vis de l'environnement.

2. Procédé selon la revendication 1 caractérisé en ce que le temps de séjour moyen des gaz dans ledit foyer (1) est compris entre 0,2 et 1 s., de préférence entre 0,3 et 0,6 s.

3. Procédé selon l'une quelconque des revendications 1 ou 2 caractérisé en ce qu'un refroidissement des cendres est prévu.

4. Procédé selon la revendication 3 caractérisé en ce que le refroidissement des cendres est réalisé par trempe des cendres dans un liquide de refroidissement.

5. Procédé selon la revendication 3 caractérisé en ce que le refroidissement est réalisé à sec, par aération des cendres.

6. Procédé selon l'une quelconque des revendications précédentes caractérisé en ce qu'une extraction des particules contenues dans les effluents de combustion est prévue, et est réalisée grâce à un moyen (40) placé à proximité de la sortie (6) des effluents.

7. Procédé selon l'une quelconque des revendications précédentes caractérisé en ce qu'un échange de chaleur est en outre réalisé par implantation dans le liquide de refroidissement des cendres, d'un dispositif (50) d'échange de chaleur.

8. Procédé selon l'une quelconque des revendications précédentes caractérisé en ce qu'une alimentation supplémentaire en combustible est prévue au niveau dudit foyer (1) qui représente 5 à 50 % du débit de combustible solide primaire.

## Patentansprüche

1. Zum Verbrennen fester Brennstoffe bestimmtes Verfahren, darin bestehend, eine im wesentlichen adiabatische Verbrennung in einem Zyklonfeuerraum (1) durchzuführen, der mit wenigstens einem tangentialen Eingang für ein Gemisch aus Luft und primärem Brennstoff versehen ist und der so mit einer spiralförmigen Bewegung um eine vertikale Achse in diesem Feuerraum (1) beaufschlagt ist und über einen gesonderten Abzug der Aschen und der Verbrennungsabströme verfügt, bei dem diese Verbrennung unterstöchiometrisch in diesem Feuerraum (1) durchgeführt und außerhalb dieses Feuerraums beendet wird und bei dem der feste Brennstoff ein Abfall oder ein aus einem Abfall abgeleiteter Brennstoff mit einem hohen Gehalt an schmelzbaren Aschen ist, wobei der feste Brennstoff ein Verhältnis von CaO/SiO2 zwischen 0,2 und 1,2 und einen hohen Gehalt an Stickstoff und Schwermetallen derart aufweist, daß dieses Verfahren es ermöglicht, die NO_{X}-Emissionen zu vermindern und geschmolzene der Umgebung gegenüber inerte Aschen zu restituieren.

2. Verfahren nach Anspruch 1, dadurch gekennzeichnet, daß die mittlere Verweilzeit der Gase in diesem Feuerraum (1) zwischen 0,2 und 1 Sekunde, bevorzugt zwischen 0,3 und 0,6 Sekunden, beträgt.

3. Verfahren nach einem der Ansprüche 1 oder 2, dadurch gekennzeichnet, daß eine Abkühlung der Aschen vorgesehen ist.

4. Verfahren nach Anspruch 3, dadurch gekennzeichnet, daß die Kühlung der Aschen durch Abschrecken der Aschen in einer Kühlflüssigkeit durchgeführt wird.

5. Verfahren nach Anspruch 3, dadurch gekennzeichnet, daß die Kühlung trocken unter Belüftung der Aschen durchgeführt wird.

6. Verfahren nach einem der vorhergenden Ansprüche, dadurch gekennzeichnet, daß eine Extraktion der in den Verbrennungsabströmen enthaltenen Partikel vorgesehen und dank eines Mittels (40) durchgeführt wird, das benachbart dem Austritt (6) der Abströme angeordnet ist.

7. Verfahren nach einem der vorhergehenden Ansprüche, dadurch gekennzeichnet, daß ein Wärmeaustausch im übrigen dadurch realisiert wird, daß in die Kühlflüssigkeit für die Aschen eine Wärmeaustauschervorrichtung (50) eingesetzt ist.

8. Verfahren nach einem der vorhergehenden Ansprüche, dadurch gekennzeichnet, daß eine zusätzliche Speisung mit Brennstoff in Höhe dieses Feuerraums (1) vorgesehen ist, die 5 bis 50 % des Durchsatzes an festem Primärbrennstoff ausmacht.

## Claims

1. Method for burning solid fuels consisting in bringing about a substantially adiabatic combustion process in a cyclonic combustor (1) provided with at least one tangential inlet for a mixture of air and primary fuel, which then moves in a helical action about a vertical axis inside the said combustor (1), and a separate discharge for the slag and combustion effluent, whereby the said combustion is conducted under substoichiometric conditions inside the said combustor and completed outside the said combustor and whereby the solid fuel is a waste or fuel derived from a waste and has a high content of meltable slag, the said solid fuel having a CaO/SiO₂ ratio of between 0.2 and 1.2 and a high content of nitrogen and heavy metals, such that the said process allows emissions of NOₓ to be reduced and renders the molten slag inert with respect to the environment.

2. Method as claimed in claim 1, characterised in that the average residence time of the gases inside the said combustor (1) ranges between 0.2 and 1 s., preferably between 0.3 and 0.6 s..

3. Method as claimed in any one of claims 1 or 2, characterised in that provision is made to cool the slag.

4. Method as claimed in claim 3, characterised in that the slag is cooled by wetting the slag in coolant liquid.

5. Method as claimed in claim 3, characterised in that the cooling is performed using a dry method by airing the slag.

6. Method as claimed in any one of the preceding claims, characterised in that provision is made to extract the particles contained in the combustion effluent and is done by dint of a means (40) located close to the outlet (6).

7. Method as claimed in any one of the preceding claims, characterised in that an exchange of heat is also brought about by installing a heat exchange device (50) in the liquid used to cool the slag.

8. Method as claimed in any one of the preceding claims, characterised in that an additional supply of fuel is provided at the level of the combustor (1) which represents 5 to 50% of the flow of primary solid fuel.
